(19) Europäisches Patentamt
European Patent Office
Office européen des brevets

(11) EP 4 650 046 A1

(12) EUROPEAN PATENT APPLICATION
published in accordance with Art. 153(4) EPC

(43) Date of publication:
19.11.2025 Bulletin 2025/47

(21) Application number: 24741574.8

(22) Date of filing: 12.01.2024

(51) International Patent Classification (IPC):
*B01J 20/20* (2006.01) *B09C 1/08* (2006.01)
*C01B 32/00* (2017.01)

(52) Cooperative Patent Classification (CPC):
B01J 20/20; B09C 1/08; C01B 32/00

(86) International application number:
PCT/JP2024/000530

(87) International publication number:
WO 2024/150802 (18.07.2024 Gazette 2024/29)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 13.01.2023 JP 2023003913

(71) Applicant: Sony Group Corporation
Tokyo 108-0075 (JP)

(72) Inventors:
- IWAMURO Ryo
  Atsugi-shi, Kanagawa 243-0014 (JP)
- KASAHARA Seiji
  Atsugi-shi, Kanagawa 243-0014 (JP)
- UEYAMA Kaho
  Atsugi-shi, Kanagawa 243-0014 (JP)
- TABATA Seiichiro
  Tokyo 108-0075 (JP)

(74) Representative: D Young & Co LLP
3 Noble Street
London EC2V 7BQ (GB)

# (54) DISPERSION, PFAS ADSORBING MATERIAL, ENVIRONMENT IMPROVING METHOD, POWDER FOR ENVIRONMENT IMPROVING LIQUID, METHOD FOR DISPERSING POROUS CARBON MATERIAL, POROUS CARBON MATERIAL, AND FILTER

(57) The present technology relates to a technology of suitably adsorbing harmful organic chemical substances such as an organofluorine compound (PFAS) represented by PFOA/PFOS and BTEX, an agrochemical substance, a heavy metal, and the like, flowing out into the environment such as soil, and a main object of the present technology is to provide a technology capable of effectively dispersing a porous carbon material serving as an adsorbent material in a liquid.

As a result of intensive studies, the present inventors have found that the porous carbon material was effectively dispersed in a liquid by using an ionic biodegradable polymer as a dispersant.

EP 4 650 046 A1

## Description

TECHNICAL FIELD

The present technology relates to a dispersion, an adsorbent material for PFAS, environmental improvement method, a powder for an environmental improvement liquid, a method for dispersing a porous carbon material, a porous carbon material, and a filter. More specifically, the present technology relates to a method for dispersing a porous carbon material using a compound with a charge, a dispersion prepared by dispersing the porous carbon material, an adsorbent material for PFAS using the dispersion, an environmental improvement method using the dispersion, a powder for an environmental improvement liquid, a porous carbon material, and a filter containing the porous carbon material.

BACKGROUND ART

Conventionally, soil contamination by chemical substances has been a social problem. In particular, an organofluorine compound (generic term for chemical substances referred to as PFAS/perfluoroalkyl compounds and polyfluoroalkyl compounds) represented by perfluorooctanoic acid (PFOA)/perfluorooctanesulfonic acid (PFOS) is hardly decomposed in an environment and is a substance harmful to a living body. Therefore, there is a need for a technology (soil restoration technology) for adsorbing these substances flowing out into the environment.

For example, Patent Document 1 described below discloses per- and polyfluoroalkyl compound adsorbent activated carbon in a water sample using an activated carbon adsorbent material having a surface oxide amount at a certain ratio or less, but the adsorbent itself is not dispersed in a liquid.

CITATION LIST

PATENT DOCUMENT

Patent Document 1: Japanese Patent Application Laid-Open No. 2021-079376

SUMMARY OF THE INVENTION

PROBLEMS TO BE SOLVED BY THE INVENTION

A main object of the present technology is to provide a technology capable of effectively dispersing a porous carbon material serving as an adsorbent material in a dispersion in relation to a technology for adsorbing a harmful chemical substance that has flowed out into an environment such as soil.

SOLUTIONS TO PROBLEMS

As a result of intensive studies, the present inventors have found that a porous carbon material was effectively dispersed in a dispersion by using an ionic biodegradable polymer as a dispersant.

That is, the present technology provides the dispersion that contains the porous carbon material having a specific surface area value of 10 $m^2/g$ or more as measured by a nitrogen BET method and a pore volume of 0.1 $cm^3/g$ or more as measured by a BJH method and an MP method, and a compound with a charge.

In the dispersion according to the present technology, the porous carbon material in the dispersion preferably has a zeta potential of +25 mV to +100 mV as measured at 25°C.

In the dispersion according to the present technology, a compound with an anionic or cationic charge may be used as the compound with a charge. In a case where a compound with a cationic charge is used as the compound with a charge, the compound includes a compound having an amino group or an aluminol group.

In the dispersion according to the present technology, the porous carbon material and the compound with a charge may be bonded, and the bond may be a chemical bond.

In the dispersion according to the present technology, the compound with a charge may include an ionic biodegradable polymer, and a compound having a polysaccharide skeleton may be used as the biodegradable polymer.

In the dispersion according to the present technology, the porous carbon material may include a porous carbon material subjected to cationization treatment, and a surface of the porous carbon material may be substituted with an amino group.

In the dispersion according to the present technology, a content of the porous carbon material may be 0.01% to 25% by weight, and furthermore, a content of the ionic biodegradable polymer may be 0.1% to 20% by weight with respect to the porous carbon material.

In the dispersion according to the present technology, a 1% solution viscosity of the ionic biodegradable polymer may be 0.1 Pa·s or more.

In the dispersion according to the present technology, the porous carbon material may have a cumulative pore volume of 0.4 cc/g or more in a range of 0.05 μm to 5 μm as measured by mercury porosimetry.

In the dispersion according to the present technology, the porous carbon material may have an average particle diameter of 0.1 to 500 μm.

In the dispersion according to the present technology, the porous carbon material may have a zeta potential of -50 to +100 mV at pH 7.0.

In the dispersion according to the present technology, the porous carbon material may have a BET specific surface area of 500 m2/g or more as measured by a nitrogen BET method.

The dispersion according to the present technology may have a viscosity of 1,000 Pa·s or less at a shear rate of 10 $s^{-1}$.

The dispersion according to the present technology may include a liquid.

Next, the present technology provides an adsorbent material for PFAS using the dispersion according to the present technology. Here, the PFAS may include an anionic organofluorine compound, and the anionic organofluorine compound may include an organofluorine compound having 8 or more carbon atoms.

The present technology further provides an environmental improvement method in which the dispersion according to the present technology is used.

The present technology provides a powder for an environmental improvement liquid, the powder including a porous carbon material having a specific surface area value of 10 $m^2/g$ or more as measured by a nitrogen BET method and a pore volume of 0.1 $cm^3/g$ or more as measured by a BJH method and an MP method, and a compound with a charge. Here, the compound with a charge may include an ionic biodegradable polymer, and a compound having a polysaccharide skeleton may be used as the biodegradable polymer.

The present technology provides a method for dispersing a porous carbon material, in which the method includes dispersing a porous carbon material in a dispersion by using a compound with a charge, and the porous carbon material has a specific surface area value of 10 $m^2/g$ or more as measured by a nitrogen BET method and a pore volume of 0.1 $cm^3/g$ or more as measured by a BJH method and an MP method. Here, the compound with a charge may include an ionic biodegradable polymer, and a compound having a polysaccharide skeleton may be used as the biodegradable polymer.

The present technology provides a porous carbon material having a specific surface area value of 10 $m^2/g$ or more as measured by a nitrogen BET method, and a pore volume of 0.1 $cm^3/g$ or more as measured by a BJH method and an MP method, in which a compound with a charge is bonded to the porous carbon material. The porous carbon material that is dispersed in water in an amount of 1% by weight may have a zeta potential of +25 mV or more as measured at 25°C.

The porous carbon material of the present technology may be used for dispersion.

Moreover, the present technology provides a filter containing the porous carbon material of the present technology.

MODE FOR CARRYING OUT THE INVENTION

Hereinbelow, preferred embodiments of the present technology will be described. However, the following embodiments illustrate examples of representative embodiments of the present technology, and the present technology is not limited only to the following preferred embodiments, and can be freely changed within the scope of the present technology.

A dispersion according to the present technology contains a porous carbon material having a specific surface area value of 10 $m^2/g$ or more as measured by a nitrogen BET method and a pore volume of 0.1 $cm^3/g$ or more as measured by a BJH method and an MP method, and a compound with a charge. The contained compound with a charge enables the porous carbon material to be effectively dispersed in the dispersion.

Here, the "dispersion" refers to a dispersion in which a single compound, a substance containing a plurality of compounds, or the like is uniformly dispersed in a dispersion medium, and generally refers to a liquid or gel form.

That is, the porous carbon material and the compound with a charge contained in the dispersion according to the present technology may each be dispersed, in the dispersion medium, as a single independent compound, or as a substance in which the porous carbon material and the compound with a charge are physically or chemically bonded.

For the dispersing example as the substance in which the porous carbon material and the compound with a charge are physically or chemically bonded, for example, the compound with a charge can be physically or chemically bonded to the surface of the porous carbon material, and the porous carbon material can be suitably dispersed in the dispersion by a repulsive force due to the charge.

Since the dispersion of the present technology contains the compound with a charge, the porous carbon material can be suitably dispersed. Therefore, in a case where the porous carbon material in the dispersion has cationic properties, for example, the zeta potential of the porous carbon material as measured at 25°C may be +25 mV to +100 mV. Note that, in

this case, the concentration of the porous carbon material in the dispersion is, for example, 1% by weight. The zeta potential can be suitably measured in accordance with JIS Z 8836:2017.

<Compound with Charge>

In the present technology, the "compound with a charge" is a compound with a positive or negative charge in the molecule of the compound. The compound with a charge preferably has ionic properties. Whether or not the compound has ionic properties can be determined, for example, on the basis of whether the compound has anionic or cationic properties in water at pH 7.0.

Charges contained in the compound with a charge that the dispersion of the present technology can contain may be either positive charges or negative charges, and both anionic charges and cationic charges can be suitably used.

In a case where the compound with a charge that the dispersion of the present technology can contain has, for example, cationic charges, the dispersion of the present technology can suitably adsorb an anionic chemical substance.

In a case where the compound with a charge that can be contained in the dispersion of the present technology has cationic charges, the compound has, for example, an amino group, an imino group, an ammonium group, an aluminol group, or the like. In particular, it is preferable to have an amino group or an aluminol group which is easily introduced by synthesis.

The compound with a charge that can be contained in the dispersion of the present technology is not particularly limited as long as it is a compound satisfying the above. In particular, from the viewpoint of reducing the risk of contaminating the environment, examples thereof include a biodegradable polymer as described later, and cationic compounds such as an amino group-containing polymer-type silane coupling material that is less likely to be released into the environment due to a strong bond to the porous carbon material, and a quaternary ammonium salt-containing disiloxane.

Examples of the amino group-containing compound described above include amino group-containing polymer-type silane coupling materials. Furthermore, examples of a low molecular compound having an aluminol group include aluminum alcoholates such as aluminum sec butoxide, ethyl acetoacetate aluminum diisopropylate, aluminum isopropylate, mono-sec-butoxyaluminum diisopropylate, aluminum-sec-butyrate, and aluminum ethylate, aluminum alkylates such as ethyl acetoacetate aluminum diisopropylate, aluminum tris-ethyl acetoacetate, alkyl acetoacetate aluminum diisopropylate, aluminum monoacetyl acetate, and aluminum-tris(acetylacetonate), and cyclic aluminum oligomers such as cyclic aluminum-oxide isopropylate and cyclic aluminum-oxide stearate, all of which undergo hydrolysis in the presence of atmospheric moisture or in water to generate aluminol groups.

<Biodegradable Polymer>

In the present technology, the "biodegradable polymer" refers to a polymer that can be decomposed by the action of an organism, and is not particularly limited as long as it can be decomposed by the action of the organism. Examples of the organism include various microorganisms.

Specific examples of the "biodegradable polymer" include a polymer in which one or a plurality of structural units (monomers) are bonded by a glycosidic bond that is a type of an ether bond, or dehydration condensation such as an ester bond. Examples of the polymer include, for example, a compound having a polysaccharide skeleton, a compound having a polyvinyl alcohol structure, and a compound having a polyethylene glycol structure. In the present technology, among these, a compound having a polysaccharide skeleton can be suitably used.

Furthermore, the "biodegradable polymer" is preferably an ionic biodegradable polymer.

The ionic biodegradable polymer contained in the dispersion according to the present technology adheres to the surface of the porous carbon material, and can be expected to suitably disperse the porous carbon material in a liquid by the repulsive force due to a charge of an ionic dissociating group. As for the liquid according to the present technology, since the porous carbon material is suitably dispersed in the liquid, it can be expected that harmful chemical substances flowing out into soil or the like are effectively adsorbed by using the liquid. Furthermore, since the biodegradable polymer contained in the liquid according to the present technology is decomposed by the action of organisms, a risk that the biodegradable polymer remains in the environment for a long period of time, thereby polluting the environment, is minimized.

Charges contained in the ionic biodegradable polymer that the dispersion according to the present technology contains may be either positive charges or negative charges, and both anionic charges and cationic charges can be suitably used. In a case where an anionic biodegradable polymer is used, it can be expected that particularly a porous carbon material having a positive surface charge is effectively dispersed in a small amount. In a case where a cationic biodegradable polymer is used, it can be expected that particularly a porous carbon material having a negative surface charge is effectively dispersed in a small amount.

In a case where the dispersion according to the present technology contains a compound having a polysaccharide skeleton as the biodegradable polymer, the "compound having a polysaccharide skeleton" is preferably a compound having a main chain of one or a plurality of monosaccharides linked by glycosidic bonds. Here, in polymers constituting a polymerized material, the "main chain" refers to the longest repeating structure of covalently bonded atoms.

Examples of the compound having a polysaccharide skeleton that can be contained in the dispersion according to the present technology include cellulose, guar gum, carrageenan, pectin, gum arabic, xanthan gum, gellan gum, agar, tragacanth gum, and chitosan. These may be modified with a substituent. Furthermore, these can be used alone or in combination.

Examples of a method for converting the compound having a polysaccharide skeleton described above into an anionic compound include a method for synthesizing the compound as a salt with an alkali metal, an alkaline earth metal, or the like. Examples of a method for converting the compound having a polysaccharide skeleton described above into a cationic compound include a method for halogenating, aminating, or aluminolating the compound.

A 1% solution viscosity of the compound with a charge, such as the ionic biodegradable polymer contained in the dispersion according to the present technology, is preferably 0.1 Pa·s or more, still more preferably 0.5 Pa·s or more, and particularly preferably 1.0 Pa·s or more at 25 degrees Celsius and a shear rate of 10 $s^{-1}$, so that it is possible to reduce the sedimentation rate of the porous carbon material and to expect to maintain the dispersion state of the porous carbon material for a long time. The 1% solution viscosity can be appropriately adjusted by the polymerization degree of a compound with a charge, such as an ionic biodegradable polymer. Here, the "1% solution viscosity" refers to a viscosity of an aqueous solution containing 1% by mass of the compound with a charge, such as the biodegradable polymer. The viscosity can be suitably measured in accordance with JISZ8803:2011 (Methods for viscosity measurement of liquid).

<Porous Carbon Material>

In the present technology, the "porous carbon material" refers to a solid substance having pores with various sizes, and refers to a material containing carbon. The specific surface area of the porous carbon material can be suitably measured by, for example, a nitrogen BET method. Furthermore, the pore volume of the porous carbon material can be measured by, for example, a BJH method and an MP method.

A raw material of the porous carbon material according to the present technology is not particularly limited, and for example, any material containing carbon such as activated carbon derived from rice husks and coconut shells can be used. Furthermore, other porous materials such as zeolite, a metal organic framework (MOF), an ion exchange resin, and mesoporous silica can be used in combination. In particular, a plant-derived material can be suitably used from the viewpoint of reducing the environmental load. Furthermore, a microbial material containing any microorganism in these materials can also be used.

The plant-derived material that can be used for the porous carbon material according to the present technology is not particularly limited as long as it is a plant-derived material, and for example, a plant containing a silicon component (referred to as a "silicate plant" or a "silicon-accumulating plant") can be suitably used. Here, examples of the silicon component contained in the plant include silicon oxides such as silicon dioxide, silicon oxide, and a silicon oxide salt.

Examples of the silicate plant include husks and straw from rice (paddy), barley, wheat, rye, Japanese barnyard millet (Japanese millet), foxtail millet (millet), as well as reed, wakame stems, coffee beans, tea leaf stems, bagasse, and bamboo, but are not limited thereto. Other examples thereof include vascular plants, fern plants, bryophytes, algae, and seagrasses that are planted on land. Note that these materials may be used alone as raw materials, or may be used in combination of two or more thereof. Furthermore, the shape and form of the plant-derived material are not particularly limited, and may be, for example, husks or straw itself, or may be a dried product. Moreover, in food and drink processing such as beer and foreign liquors, those subjected to various treatments such as fermentation treatment, roasting treatment, and extraction treatment can also be used. In particular, from the viewpoint of recycling industrial waste, it is preferable to use straw or husks after processing such as threshing. Such processed straw or husks can be easily obtained in large quantities from, for example, agricultural cooperatives, alcoholic beverage producing companies, food companies, and the like.

The porous carbon material according to the present technology can be suitably produced by any production method. For example, in a case where the porous carbon material is produced using a plant-derived material as a raw material, the raw material can be subjected to any combination of steps of pulverization, molding, carbonization, silica removal, activation, washing, and sieving in accordance with the application to produce a porous carbon material. Known conditions can be suitably used for each of the above-described steps.

The porous carbon material suitably used in the present technology has a specific surface area value (hereinbelow, simply referred to as a "specific surface area value") of 10 $m^2/g$ or more as measured by a nitrogen BET method and has a pore volume of 0.1 $cm^3/g$ or more as measured by a BJH method and an MP method.

The specific surface area value of the porous carbon material according to the present technology is preferably 10 $m^2/g$ or more, more preferably 50 $m^2/g$ or more, still more preferably 100 $m^2/g$ or more, and particularly preferably 500 $m^2/g$ or more. As the specific surface area of the porous carbon material increases, improved functionality can be

expected. Note that the above-described specific surface area refers to a specific surface area of the porous carbon material itself, and does not refer to a specific surface area in a state in which the porous carbon material has adsorbed a compound that is subjected to adsorption, such as a harmful organic compound.

The nitrogen BET method is a method including measuring an adsorption isotherm by adsorbing and desorbing nitrogen as an adsorption molecule on the porous carbon material, and analyzing measured data on the basis of a BET equation represented by Equation (1), and the specific surface area, the pore volume, and the like can be calculated on the basis of this method.

Specifically, in a case where the specific surface area value is calculated by the nitrogen BET method, first, an adsorption isotherm is obtained by adsorbing and desorbing nitrogen as an adsorption molecule on the porous carbon material. Then, from the obtained adsorption isotherm, $[p/\{V_a(p_0 - p)\}]$ is calculated on the basis of Equation (1) or Equation (1') obtained by modifying Equation (1), and the result is plotted against an equilibrium relative pressure $(p/p_0)$. Then, this plot is regarded as a straight line, and a slope s (= $[(C - 1)/(C \cdot V_m)]$) and an intercept i (= $[1/(C \cdot V_m)]$) are calculated on the basis of a least squares method. Then, $V_m$ and C are calculated from the obtained slope s and intercept i on the basis of Equation (2-1) and Equation (2-2). Moreover, a specific surface area $a_{sBET}$ is calculated from $V_m$ on the basis of Equation (3) (see BELSORP-mini and BELSORP analysis software manual manufactured by BEL Japan, Inc., pages 62 to 66).

Note that the nitrogen BET method is a measurement method according to JIS R 1626-1996 "Measuring methods for the specific surface area of fine ceramic powders by gas adsorption using the BET method".

$$V_a = (V_m \cdot C \cdot p)/[(p_0 - p)\{1 + (C - 1)(p/p_0)\}] \quad (1)$$

$$[p/\{V_a(p_0 - p)\}] = [(C-1)/(C \cdot V_m)](p/p_0) + [1/(C \cdot V_m)] \quad (1')$$

$$V_m = 1/(s+i) \quad (2\text{-}1)$$

$$C = (s/i) + 1 \quad (2\text{-}2)$$

$$a_{sBET} = (V_m \cdot L \cdot \sigma)/22414 \quad (3)$$

Here,

$V_a$: The adsorption amount;
$V_m$: The adsorption amount of a monomolecular layer;
p: The pressure at equilibrium of nitrogen;
$p_0$: The saturated vapor pressure of nitrogen;
L: Avogadro's number; and
$\sigma$: The adsorption cross-sectional area of nitrogen.

In a case where the pore volume $V_p$ is calculated by the nitrogen BET method, for example, the obtained adsorption data on the adsorption isotherm is linearly interpolated to determine the adsorption amount V at a relative pressure set by the pore volume calculation relative pressure. The pore volume $V_p$ can be calculated from the adsorption amount V on the basis of Equation (4) (see BELSORP-mini and BELSORP analysis software manual manufactured by BEL Japan, Inc., pages 62 to 65). Note that, hereinbelow, the pore volume based on the nitrogen BET method may be simply referred to as a "pore volume".

$$V_p = (V/22414) \times (M_g/\rho_g) \quad (4)$$

Here,

V: The adsorption amount at a relative pressure;
$M_g$: The molecular weight of nitrogen; and
$\rho_g$: The density of nitrogen.

The pore volume of the porous carbon material according to the present technology, obtained by a BJH method and a MP method, is preferably 0.1 $cm^3/g$ or more, more preferably 0.15 $cm^3/g$ or more, and still more preferably 0.2 $cm^3/g$ or more. As the pore volume of the porous carbon material, obtained by the BJH method and the MP method, increases,

improved functionality can be expected. Note that the above-described pore volume refers to a pore volume of the porous carbon material itself, and does not refer to a pore volume in a state in which the porous carbon material has adsorbed a compound that is subjected to adsorption, such as a harmful organic compound.

A pore diameter of the pores in the porous carbon material can be calculated as a pore distribution from the pore volume change rate with respect to the pore diameter, for example, based on the BJH method. The BJH method is a method widely used as a pore distribution analysis method.

In a case where the pore distribution analysis is performed based on the BJH method, first, a desorption isotherm is obtained by adsorbing and desorbing nitrogen as an adsorption molecule on the porous carbon material. Then, the thickness of an adsorption layer when the pores are filled with adsorption molecules (for example, nitrogen) and the adsorbed molecules are gradually adsorbed and desorbed, and the inner diameter (twice the core radius) of the pore that is produced during adsorption and desorption are determined on the basis of the obtained desorption isotherm, a pore radius $r_p$ is calculated on the basis of Equation (5), and a pore volume is calculated on the basis of Equation (6). Then, a pore volume change rate ($dV_p/dr_p$) with respect to a pore diameter ($2r_p$) is plotted from the pore radius and the pore volume to obtain a pore distribution curve (see BELSORP-mini and BELSORP analysis software manual manufactured by BEL Japan, Inc., pages 85 to 88).

$$r_p = t + r_k \quad (5)$$

$$V_{pn} = R_n \cdot dV_n - R_n \cdot dt_n \cdot c \cdot \Sigma A_{pj} \quad (6)$$

where,

$$R_n = r_{pn}^2/(rkn - 1 + dt_n)^2 \quad (7)$$

Here,

$r_p$: The pore radius;
$r_k$: The core radius (inner diameter/2) in a case where the adsorption layer having a thickness t is adsorbed on the inner wall of a pore with the pore radius rp at that pressure;
$V_{pn}$: The pore volume when the nth adsorption and desorption of nitrogen occurs;
$dV_n$: The change amount at that time;
$dt_n$: The change amount of the thickness $t_n$ of the adsorption layer when the nth adsorption and desorption of nitrogen occurs;
$r_{kn}$: The radius of a core at that time;
c: The fixed value; and
$r_{pn}$: The pore radius when the nth adsorption and desorption of nitrogen occurs. Furthermore, $\Sigma A_{pj}$ represents an integrated value of an area of a wall surface of a pore from j = 1 to j = n - 1.

A pore diameter of the pores can be calculated as a pore distribution from the pore volume change rate with respect to the pore diameter, for example, based on the MP method. In a case where the pore distribution analysis is performed by the MP method, first, an adsorption isotherm is determined by adsorbing nitrogen to the porous carbon material. Then, the adsorption isotherm is converted into a pore volume with respect to the thickness t of the adsorption layer (t plot). Then, a pore distribution curve can be obtained on the basis of the curvature of the plot (the change amount of the pore volume with respect to the change amount of the thickness t of the adsorption layer) (see BELSORP-mini and BELSORP analysis software manual manufactured by BEL Japan, Inc., pages 72, 73, and 82).

In the porous carbon material contained in the dispersion according to the present technology, a cumulative pore volume in a range of 0.05 μm to 5 μm as measured by mercury porosimetry is preferably 0.4 cc/g or more, more preferably 0.5 cc/g or more, and particularly preferably 0.7 cc/g or more. As the pore volume increases, improved functionality can be expected. The mercury porosimetry can be suitably measured in accordance with JIS R 1655:2003.

The upper limit of the average particle diameter of the porous carbon material contained in the dispersion according to the present technology is, for example, preferably 500 μm or less, more preferably 50 μm or less, and still more preferably 5 μm or less. Since the average particle diameter is adjusted within the above-described range or less, it can be expected that the sedimentation rate of the porous carbon material decreases, and the dispersion state of the porous carbon material in the liquid is maintained for a longer time. Moreover, since the average particle diameter is set within the above-described range or less, it can be expected that the diffusibility of the porous carbon material into soil or environmental water is improved in a case where environmental improvement or the like is performed using the dispersion according to the present technology.

The lower limit of the average particle diameter of the porous carbon material contained in the dispersion according to the present technology is not particularly limited, and from the viewpoint of facilitating production, suitable production can be achieved, for example, by setting the average particle diameter to preferably 0.1 μm or more, more preferably 0.5 μm or more, and still more preferably 1.0 μm or more.

Note that the average particle diameter of the porous carbon material can be suitably adjusted by making the average particle diameter uniform through sieving or the like performed at any timing in the production processes for the porous carbon material.

The porous carbon material contained in the dispersion according to the present technology can be expected to efficiently adsorb an organofluorine compound (PFAS) represented by PFOA/PFOS in such a manner that the amount of cations present on the surface of the porous carbon material is increased by cationization treatment.

As for the cations present on the surface of the porous carbon material contained in the dispersion according to the present technology, the surface of the porous carbon material may be substituted with cationic groups (the cationic groups are covalently bonded to the porous carbon material) to cationize the porous carbon material as a single molecular entity, or the porous carbon material may be covered with a cationic substance other than the porous carbon material, to be cationized.

In a case where the porous carbon material is covered with a cationic substance different from the porous carbon material, the surface of the porous carbon material and the surface of the cationic substance are bonded by an interfacial bonding force. Here, the "interfacial bonding force" depends on chemical interactions and/or mechanical bonding between molecules on both surfaces.

The cationic groups used in the cationization treatment of the porous carbon material contained in the dispersion according to the present technology are not particularly limited as long as they are cationic groups, examples thereof include an amino group, an imino group, an ammonium group, and an aluminol group, and in particular, an amino group or an aluminol group can be suitably used.

The method for cationizing the porous carbon material contained in the dispersion according to the present technology is not limited, and any method can be used. In a case where the cationization treatment is performed by coating the porous carbon material with a cationic substance, as the cationic substance, for example, 3-aminopropyltriethoxysilane, N-2-(aminoethyl)-3-aminopropyltrimethoxysilane, N-2-(aminoethyl)-3-aminopropylmethyldimethoxysilane, N-2-(aminoethyl)-8-aminooctyltrimethoxysilane, N-2-(aminoethyl)-3-aminoethyltrimethoxysilane, or the like can be suitably used. In this case, the porous carbon material can be suitably coated with the cationic substance by mixing the porous carbon material and the cationic substance under a heating condition.

The extent of the cationization treatment of the porous carbon material contained in the dispersion according to the present technology can be determined by X-ray photoelectron spectroscopy (XPS) surface analysis. The XPS surface analysis can be suitably measured in accordance with JIS K 0162:2010.

The lower limit of the zeta potential at pH 7.0 of the porous carbon material contained in the dispersion according to the present technology is preferably -50 mV or more, more preferably -20 mV or more, and still more preferably 10 mV or more, and the upper limit is +100 mV or less, more preferably 70 mV or less, and still more preferably 50 mV or less, and the extent of the cationization treatment can be controlled within the range to be appropriately adjusted. Note that it can be expected to improve the adsorption performance by appropriately adjusting the range of the zeta potential depending on a harmful organic compound to be adsorbed. The zeta potential can be suitably measured in accordance with JIS Z 8836:2017.

<Dispersion>

The dispersion according to the present technology is used to dissolve or disperse components of the porous carbon material and the compound with a charge such as the ionic biodegradable polymer in a dispersion medium such as water. Here, the term "dissolve" refers to a state in which a component such as a solute is mixed with a dispersion medium to form a uniform phase.

Furthermore, the term "dispersion" refers to a state in which components are scattered as fine particles in a substance (dispersion medium) that forms one phase. Note that, as described above, the dispersion according to the present technology is usually in the form of a liquid or gel. Furthermore, in the present specification, in a case where the porous carbon material and the compound with a charge are dissolved in a dispersion medium, the dispersion is a solution, and the dispersion medium is a solvent.

The dispersion medium that can be used for the dispersion according to the present technology is not particularly limited, and for example, water can be suitably used.

In the dispersion according to the present technology, the upper limit of the content of the porous carbon material is not particularly limited, and is preferably 25% by weight or less, more preferably 15% by weight or less, still more preferably 10% by weight or less, for example. The lower limit of the content of the porous carbon material is not particularly limited, and can be, for example, preferably 0.01% by weight or more, more preferably 0.1% by weight or more, and still

more preferably 1.0% by weight or more.

In the dispersion according to the present technology, in a case where the compound with a charge such as an ionic biodegradable polymer is contained in an amount of 0.1% by weight or more, more preferably 0.5% by weight or more, and still more preferably 1% by weight or more in terms of the porous carbon material proportion with respect to 100% by weight of the porous carbon material, the porous carbon material can be suitably dispersed in the dispersion. The upper limit of the content of the compound with a charge is not particularly limited, and can be contained in an amount of 20% by weight or less, more preferably 15% by weight or less, and still more preferably 10% by weight or less in terms of the porous carbon material proportion with respect to 100% by weight of the porous carbon material.

A viscosity at a shear rate of 10 $s^{-1}$ of the dispersion according to the present technology is preferably 1,000 Pa·s or less, more preferably 100 Pa·s or less, and particularly preferably 10 Pa·s or less. Since the viscosity at a shear rate of 10 $s^{-1}$ is set within the above-described range, and the dispersion can be expected to be suitably used for the application of environmental improvement of, for example, soil, environmental water, or the like described later, the dispersion exhibits excellent ease of use.

<Other Components>

The dispersion according to the present technology may contain other components in addition to those described above, as necessary, as long as desired various physical properties are not significantly impaired. Examples of the other components include a low molecular weight surfactant. One kind of these components may be contained, or two or more kinds thereof may be contained in any combinations and ratios.

<Adsorbent Material>

As for the dispersion according to the present technology, since the porous carbon material is suitably dispersed in the dispersion, it can be expected that harmful chemical substances flowing out into the environment such as soil are effectively adsorbed using the dispersion.

The chemical substance adsorbed by the dispersion according to the present technology is not particularly limited, and for example, it can be expected that harmful organic compounds such as an organofluorine compound (PFAS) represented by PFOA/PFOS and benzene/toluene/ethylbenzene/xylene (BTEX), an agrochemical substance, a heavy metal, and the like are suitably adsorbed. In particular, the dispersion according to the present technology is useful as an adsorbent material for PFAS because the dispersion is less likely to be decomposed in the environment and can be expected to suitably adsorb PFAS which is a substance harmful to a living body.

The PFAS to be adsorbed by the dispersion according to the present technology is not particularly limited, and the dispersion can be expected to suitably adsorb, for example, an anionic organofluorine compound or the like. The dispersion can be expected to adsorb, as the anionic organofluorine compound, a relatively high-molecular-weight organofluorine compound with 8 or more carbon atoms, 9 or more carbon atoms, or 10 or more carbon atoms, for example, while also adsorbing a low-molecular-weight organofluorine compound with less than 8 carbon atoms, which cannot be efficiently adsorbed by activated carbon or the like.

<Environmental Improvement Method>

The environmental improvement method of soil, environmental water, or the like using the dispersion according to the present technology is not particularly limited, and the dispersion according to the present technology can be suitably used in any environmental improvement method. As for any environmental improvement method, examples of a soil improvement method and an environmental water improvement method include in-situ purification (On site) in which the target soil or environmental water is improved without moving the soil or environmental water from the location thereof, and in-site treatment (In site) in which the target soil or environmental water is moved from the location of the soil or environmental water and is then improved.

Note that the term "soil" herein refers to a product of the outermost layer of the earth’s crust in which inorganic components containing fragments of rocks and organic components produced by decomposition of corpses of animals and plants are mixed, and includes groundwater contained in the soil. The term "environmental water" refers to water and groundwater in public waters such as rivers, lakes, and oceans. Furthermore, the term "environmental improvement" such as "soil improvement" and "environmental water improvement" refers to a general technology for improving the properties of the target soil or environmental water, and includes, for example, pollution restoration that brings contaminated soil or contaminated environmental water closer to an original state.

Examples of the soil or environmental water improvement method at On site include an in-situ stirring method in which a treatment liquid is sprayed onto contaminated soil or contaminated environmental water and stirred by a backhoe or the like, and an in-situ injection method in which a well (injection well) is installed and a treatment liquid is injected.

Examples of the soil or environmental water improvement method at In site include landfarming in which contaminated soil or the like is excavated, moved to a predetermined location, and stirred while a treatment liquid is added and mixed, and a method in which contaminated soil is piled up in a pile shape, and a treatment liquid is injected via a pipe that has been buried therein. The dispersion according to the present technology can be suitably used as the above-described treatment liquid or in combination with other agents or the like. Furthermore, it is also possible to use a treatment liquid adjusted by mixing a powder for an environmental improvement liquid containing the porous carbon material and the compound with a charge such as an ionic biodegradable polymer according to the present technology with an any dispersion medium.

The powder for an environmental improvement liquid according to the present technology can contain a component equivalent to the dispersion according to the present technology described above. The powder for environmental improvement according to the present technology may be a powdery mixture obtained by mixing raw materials constituting the powder for environmental improvement according to the situation of use, or may be molded into any form such as a pellet or a tablet.

In a case where the soil or environmental water is improved by the treatment liquid using the powder or dispersion for the environmental improvement liquid according to the present technology, whether or not the powder or dispersion for the environmental improvement liquid of the present technology is used can be confirmed, for example, by the following method.

First, particles containing the porous carbon material and the like are recovered by filtering the soil or the like under reduced pressure. Thereafter, the recovered porous carbon material is packed in an HPLC column, and a UV detector is connected at the downstream. Ultrapure water flows while the column is heated to 150°C using a column oven, and washing is performed until the numerical value from the UV detector asymptotically approaches 0. The conditions for passing ultrapure water at this stage are, for example, a pressure of 3 MPa, a liquid amount of 2 mL/min, and the like, and under these conditions, washing can be suitably achieved, but the conditions are not limited thereto. Thereafter, the above-described particles are taken out and sufficiently dried at 150°C until there is no weight change, and it can be then confirmed, according to the aforementioned method, to measure the specific surface area by the nitrogen BET method and the pore volume by the BJH method and the MP method.

Furthermore, the compound with a charge such as the ionic biodegradable polymer can be confirmed by drying and removing the dispersion medium from the filtrate after filtration, and then combining infrared spectroscopy, a potentiometric titration method, and a general biodegradability evaluation method represented by JIS K 6953-1:2011.

<Porous Carbon Material To Which Compound With Charge Is Bonded >

The porous carbon material contained in the powder for environmental improvement liquid according to the present technology described above and the compound with a charge may be bonded to each other. More specifically, the porous carbon material may be a porous carbon material having a specific surface area value of 10 $m^2/g$ or more as measured by the nitrogen BET method and a pore volume of 0.1 $cm^3/g$ or more as measured by the BJH method and the MP method, and the compound with a charge is bonded.

The bond between the porous carbon material and the compound with a charge may be a physical bond, but is more suitably a chemical bond from the viewpoint of increasing the bonding strength.

In a case where the porous carbon material to which the compound with a charge of the present technology is bonded is mixed with any dispersion medium and is used as a dispersion or the like, for example, the porous carbon material is suitably dispersed in the dispersion because the compound with a charge is bonded. For example, since the compound with a charge is bonded to the porous carbon material in a case where the porous carbon material has cationic properties, the zeta potential measured at 25°C in a case where the porous carbon material is dispersed in water at 1% by weight can be +25 mV or more.

As described above, the porous carbon material to which the compound with a charge of the present technology is bonded can also be used as the powder for environmental improvement liquid, and can also be used as, for example, a material constituting a filter or the like based on high adsorption characteristics to chemical substances such as an organofluorine compound.

In the present specification, the "filter" refers to a device that removes a chemical substance such as an organofluorine compound from a fluid. The filter may be obtained, according to a situation of use, by molding a raw material containing the porous carbon material to which the compound with a charge of the present technology is bonded into any form according to a use application, may be a powder containing the raw material containing the porous carbon material to which the compound with a charge of the present technology is bonded, may be a form in combination with another member, or may be a form in which another raw material is dispersed as a medium. Examples of the form in combination with another member include a form in which a member such as a nonwoven fabric is combined, and the nonwoven fabric and the porous carbon material to which the compound with a charge of the present technology is bonded are laminated. Furthermore, examples of the form in which another raw material is dispersed as a medium include paper or a resin sheet in which the porous carbon material to which the compound with a charge of the present technology is bonded is added

during papermaking processing to disperse the porous carbon material, fibers containing the porous carbon material to which the compound with a charge of the present technology is bonded by, for example, a method for dispersing the porous carbon material, and the like.

## Examples

Hereinbelow, the present technology will be described more specifically using examples. Note that the present technology is not limited to the contents of the following examples at all.

### <Preparation of Porous Carbon Material>

As a plant-derived material used in Examples, husks (Indian and Indica rice husks) of rice (paddy) were used to prepare the following carbon materials 1 to 4.

Into an alumina crucible, 10 g of the husks was placed, heated to 500°C at a heating rate of 5°C/min in a nitrogen stream (10 L/min), carbonized at the carbonization temperature for 6 hours to convert the husks into a carbonaceous matter (porous carbon material precursor), and then cooled to room temperature to obtain a porous carbon material precursor.

The porous carbon material precursor was pulverized and mixed using an agate mortar so that potassium bromide (KBr) was about 5% by weight with respect to 100% by weight of each sample to adjust a sample.

Thereafter, the porous carbon material precursor was immersed in a sodium hydroxide aqueous solution having a concentration of 18 mol/L under conditions of 105°C and 1,0 MPa, and held for 10 hours to obtain a porous carbon material. Note that, while the carbonized material was immersed in the sodium hydroxide aqueous solution, the sodium hydroxide aqueous solution was stirred to adjust the concentration and temperature of the sodium hydroxide aqueous solution to be substantially uniform.

The porous carbon material obtained as described above was washed until neutral using RO water filtered with a reverse osmosis (RO) membrane, and then dried at 120°C for 24 hours.

The porous carbon material that had been subjected to alkaline treatment was subjected to activation treatment based on a gas activation method, specifically, activation treatment using oxygen/water vapor at 800°C to 950°C for 2 hours.

For each material, the specific surface area by the nitrogen BET method and the pore volume by the BJH method calculated by the above-described method are illustrated in Table 1. Note that the specific surface area by the nitrogen BET method and the pore volume was measured by a specific surface area/pore distribution measuring apparatus (product name: BELSORP mini, manufactured by BEL Japan, Inc.). Furthermore, reference materials 1 and 2 in Table 1 are data of coconut shell activated carbon as a reference.

The zeta potential in Table 1 was measured by mixing 0.15 g of each porous carbon material with 15 mL of water and subjecting the mixture to ultrasonic treatment for 5 minutes, followed by measuring the sample by electrophoresis. For the measurement, Zetasizer ULTRA (Malvern Panalytical Ltd) was used. The measurement was performed at 25°C.

Moreover, the removal rate of PFAS in Table 1 was measured by the following procedure.

(1) 20 mL of a mixed aqueous solution with 28 types of PFAS prepared at a concentration of 5,000 ng/L and 10 mg of each porous carbon material were stirred in a 50 mL PP tube for 1 hour.
(2) Thereafter, the porous carbon material was filtered using a syringe filter having a diameter of 0.22 μm, and the PFAS concentration of the obtained filtrate was analyzed using LC-MS/MS.
(3) The total removal rate of PFAS having a carbon chain with 4 or more carbon atoms was determined from values of a PFAS concentration measured by the similar operations as in the above (1) and (2) without an adsorbent material and a concentration after treatment with the adsorbent.

In the measurement of the removal rate of PFAS, the quantified PFAS having a carbon chain with 4 or more carbon atoms includes PFBS, PFHxS, PFHpS, PFOS, PFDS, FOSA, N-MeFOSAA, N-EtFOSAA, 6:2FTSA, 8:2FTSA, PFBA, PFPeA, PFHxA, PFHpA, PFOA, PFNA, PFDA, PFUnDA, PFDoDA, PFTrDA, and PFTeDA.

[Table 1]

| | Carbon material 1 | Carbon material 2 | Carbon material 3 | Carbon material 4 | Reference material 1 | Reference material 2 |
|---|---|---|---|---|---|---|
| Raw material | Husks from rice (paddy) | Husks from rice (paddy) | Husks from rice (paddy) | Husks from rice (paddy) | Coconut shell activated carbon | Coconut shell activated carbon |

(continued)

| | Carbon material 1 | Carbon material 2 | Carbon material 3 | Carbon material 4 | Reference material 1 | Reference material 2 |
|---|---|---|---|---|---|---|
| Pore volume by BJH method ($cm^3/g$) | 0.39 | 0.43 | 0.45 | 0.45 | 0.08 | 0.08 |
| Pore volume by MP method ($cm^3/g$) | 0.28 | 0.31 | 0.31 | 0.32 | 0.47 | 0.50 |
| Specific surface area by nitrogen BET method ($m^2/g$) | 790 | 876 | 840 | 836 | 1092 | 1150 |
| Average particle diameter (D50) in particle diameter range ($\mu m$) | 27.2 | 200-500 | 2.7 | About 60 | 36.0 | 200-500 |
| Zeta potential (mV) | +15.5 | +23.1 | -42.1 | +9.7 | - | +9.8 |
| Removal rate of PFAS (%) | ≥ 99.5 | 99.2 | 98.6 | ≥ 99.5 | - | 90.5 |

Next, as the porous carbon material to which a compound with a charge was bonded, carbon materials A to D were adjusted. Conditions for the adjustment included the following method in addition to the conditions of the carbon materials 1 to 4 described above.

<Cation Coating of Porous Carbon Material>

The carbon material 4 was used as a raw material, 10 ml of a reaction solution having an effective concentration of 1% by weight in each compound was added to 1 g of the carbon material, and the mixture was mixed at room temperature for 30 minutes. Thereafter, only the carbon material was recovered by centrifugation, and heated at 110°C for 1 hour to react each compound. Subsequently, washing using ethanol was performed two times, and dried again at 110°C for 4 hours to prepare the carbon materials A to D. For each material, the specific surface area by the nitrogen BET method and the pore volume by the BJH method calculated by the above-described method are illustrated in Table 2. Note that the specific surface area by the nitrogen BET method and the pore volume was measured by a specific surface area/pore distribution measuring apparatus (product name: BELSORP mini, manufactured by BEL Japan, Inc.).

Furthermore, the measurement conditions of the carbon materials A to D are the same as the conditions of the carbon materials 1 to 4 described above. The results thereof are illustrated in Table 2.

[Table 2]

| | Carbon material A | Carbon material B | Carbon material C | Carbon material D |
|---|---|---|---|---|
| Raw material | Husks from rice (paddy) | Husks from rice (paddy) | Husks from rice (paddy) | Husks from rice (paddy) |
| Compound with charge | Amino group-containing polymer X-12-972F (Shin-Etsu Chemical Co., Ltd.) | Quaternary ammonium salt-containing disiloxane X-12-1126 (Shin-Etsu Chemical Co., Ltd.) | Aluminum sec-butoxide | Ethyl acetoacetate aluminum diisopropylate |
| Pore volume by BJH method ($cm^3/g$) | 0.35 | 0.39 | 0.47 | 0.37 |
| Pore volume by MP method ($cm^3/g$) | 0.26 | 0.29 | 0.31 | 0.28 |
| Specific surface area by nitrogen BET method ($m^2/g$) | 668 | 739 | 846 | 706 |

(continued)

| | Carbon material A | Carbon material B | Carbon material C | Carbon material D |
|---|---|---|---|---|
| Average particle diameter (D50) in particle diameter range (μm) | About 60 | About 60 | About 60 | About 60 |
| Zeta potential (mV) | +31.1 | +31.9 | +31.3 | +38.2 |
| Removal rate of PFAS (%) | ≥ 99.5 | ≥ 99.5 | ≥ 99.5 | ≥ 99.5 |

<Evaluation of Dispersion Stability>

A dispersant such as an ionic biodegradable polymer illustrated in Table 3 was used to prepare 6 mL of a 0.1% by weight aqueous dispersion, 60 mg of the carbon material 3 illustrated in Table 1 was added thereto, and the mixture was gently shaken to adjust a liquid (the liquid contains 10% by weight of the dispersant compared to the porous carbon material).

Thereafter, the liquid was dispersed for 15 minutes with an ultrasonic cleaner (product name: W-113/manufactured by Honda Electronics Co., Ltd.), and the dispersion state was visually observed 6 days after dispersion and 1 month after dispersion, and was evaluated according to the following criteria.

[Evaluation Criteria]

A. No apparent concentration gradient was observed.
B. Concentration gradient is starting to form.
C. Obvious concentration gradient is observed.

[Table 3]

| | Example 1 | Example 2 | Example 3 | Comparative Example 1 | Comparative Example 2 | Comparative Example 3 | Comparative Example 4 |
|---|---|---|---|---|---|---|---|
| Dispersion material (contained at 10% by weight with respect to porous carbon material) | Sodium carboxy-methyl 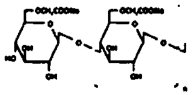 cellulose | Cationic guar gum 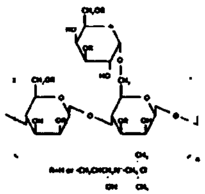 | Xanthan gum 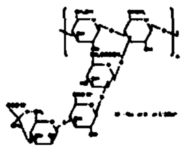 | None | Guar gum 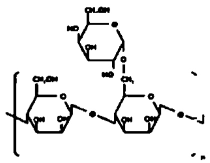 | Hydroxypropyl cellulose 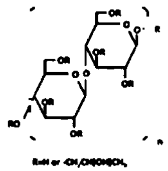 | Polyethyleneimine 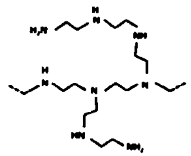 |
| Ionic properties | Present | Present | Present | - | Absent | Absent | Present |
| Dispersion stability (6 days after dispersion) | A 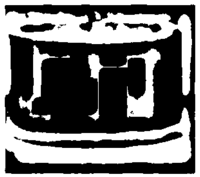 | A 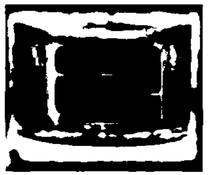 | A 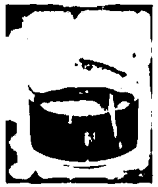 | C 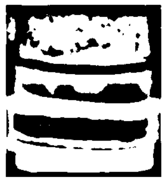 | B 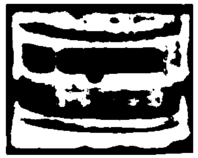 | C 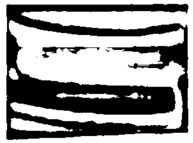 | A 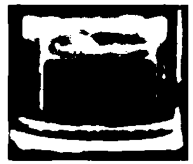 |
| Dispersion stability (one month after dispersion) | A 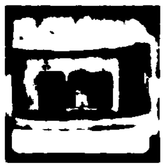 | B 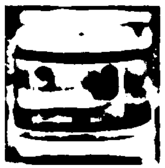 | A 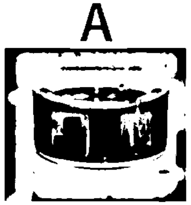 | | | | C 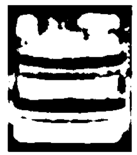 |
| Biodegradability (environmental contamination risk) | Present | Present | Present | - | Present | Present | Absent |

For the dispersant such as the ionic biodegradable polymer illustrated in Table 3, a dispersion material was dissolved in water so that the concentration thereof was 1% by weight, and a 1% solution viscosity of the dispersion material was measured as a viscosity at a shear rate of 10 $s^{-1}$. For the measurement, a digital viscometer DV2T (AMETEK Brookfield) was used. The results thereof are illustrated in Table 4.

Similarly, with respect to the dispersant such as the ionic biodegradable polymer illustrated in Table 3, the porous carbon material, the dispersant, and the solvent were mixed at a weight ratio of porous carbon material:dispersant:solvent = 1:0.1:98.9 or 10:1:89 to obtain samples, the samples were subjected to ultrasonic treatment for 5 minutes, and the viscosity of the dispersion containing the porous carbon material of 1% by weight and the viscosity of the dispersion containing the porous carbon material of 10% by weight were measured. For the measurement, a digital viscometer DV2T (AMETEK Brookfield) was used. The results thereof are illustrated in Table 4.

[Table 4]

| | Example 1 | Example 2 | Example 3 |
|---|---|---|---|
| Dispersion material (compound with charge | Sodium carboxymethyl cellulose | Cationic guar gum | Xanthan gum |
| 1% Solution viscosity of dispersion material (Pa·s) | 10.9 | 2.25 | 3.50 |
| Viscosity of dispersion containing porous carbon material of 1% by weight (mPa·s) | 67.1 | 19.5 | 61.7 |
| Viscosity of dispersion containing porous carbon material of 10% by weight (Pa·s) | 22.5 | 4.63 | 5.63 |

Each of carbon materials A to D in an amount of 60 mg was added to water, and the mixture was gently shaken to adjust a liquid.

Thereafter, the liquid was dispersed for 15 minutes with an ultrasonic cleaner (product name: W-113/manufactured by Honda Electronics Co., Ltd.), and the dispersion state was visually observed 6 days after dispersion and 1 month after dispersion, to evaluate the dispersibility of the porous carbon material to which the compound with a charge is bonded according to the similar criteria as in Examples 1 to 3. The results thereof are illustrated in Table 5.

[Table 5]

| | Carbon material A | Carbon material B | Carbon material C | Carbon material D |
|---|---|---|---|---|
| Dispersion stability (6 days after dispersion) | A 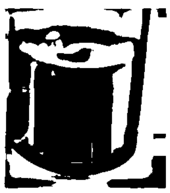 | A 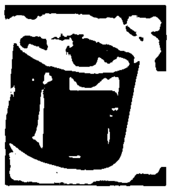 | A 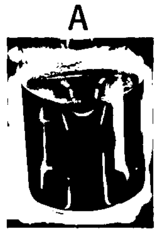 | A 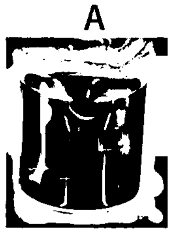 |

<Evaluation of Adsorption Characteristics>

Adsorption characteristics were evaluated using alizarin cyanine green (1,4-N,N'-bis(4-methyl-2-sulfophenyl) aminoanthraquinone disodium salt/FUJIFILM Wako Pure Chemical Corporation), an anionic dye, which is used as an alternative substance for anionic PFAS that is a substance harmful to a living body.

To an aqueous solution of 6 mL of 0.1% by weight sodium carboxymethylcellulose was added 60 mg of the porous carbon material illustrated in Table 1, and 1 mL of a solution prepared by the similar method as in the test for evaluation of dispersion stability described above and 20 mL of alizarin cyanine green (concentration: 75 mg/L) were stirred in a vessel for 6 hours at room temperature. Thereafter, the porous carbon material was removed by filtration using a filter, and the adsorption amount was calculated by measuring the absorbance of the filtrate at a wavelength of 611 nm using an absorbance measuring device (product name: U-3900/manufactured by Hitachi High-Tech Corporation). The results thereof are illustrated in Table 6.

[Table 6]

| Porous carbon material | Carbon material 1 | Carbon material 2 | Carbon material 3 | Carbon material 4 | Reference material 1 | Reference material 2 |
|---|---|---|---|---|---|---|
| Adsorption amount (mg) | 0.97 | 0.67 | 1.44 | 0.92 | 0.34 | 0.22 |

Note that the present technology can have the following configurations.

(1) A dispersion containing:

a porous carbon material having a specific surface area value of 10 $m^2/g$ or more as measured by a nitrogen BET method and a pore volume of 0.1 $cm^3/g$ or more as measured by a BJH method and an MP method; and
a compound with a charge.

(2) The dispersion according to (1), in which the porous carbon material in the dispersion preferably has a zeta potential of +25 mV to +100 mV as measured at 25°C.
(3) The dispersion according to (1) or (2), in which the compound with a charge is a compound with a cationic charge.
(4) The dispersion according to (3), in which the compound with a cationic charge is a compound having an amino group or an aluminol group.
(5) The dispersion according to any one of (1) to (4), in which the porous carbon material and the compound with a charge are bonded to each other.
(6) The dispersion according to (5), in which the bond is a chemical bond.
(7) The dispersion according to any one of (1) to (6), in which the compound with a charge is an ionic biodegradable polymer.
(8) The dispersion according to (7), in which the biodegradable polymer is a compound having a polysaccharide skeleton.
(9) The dispersion according to any one of (1) to (8), in which the porous carbon material is a porous carbon material subjected to cationization treatment.
(10) The dispersion according to any one of (1) to (9), in which a surface of the porous carbon material is substituted with an amino group.
(11) The dispersion according to any one of (1) to (10), in which a content of the porous carbon material is 0.01% to 25% by weight.
(12) The dispersion according to any one of (7) to (11), in which a content of the ionic biodegradable polymer is 0.1% to 20% by weight with respect to the porous carbon material.
(13) The dispersion according to any one of (7) to (12), in which a 1% solution viscosity of the ionic biodegradable polymer is 0.1 Pa·s or more.
(14) The dispersion according to any one of (1) to (13), in which the porous carbon material has a cumulative pore volume of 0.4 cc/g or more in a range of 0.05 μm to 5 μm as measured by mercury porosimetry.
(15) The dispersion according to any one of (1) to (14), in which the porous carbon material has an average particle diameter of 0.1 to 500 μm.
(16) The dispersion according to any one of (1) to (15), in which the porous carbon material has a zeta potential of -50 to +100 mV at pH 7.0.
(17) The dispersion according to any one of (1) to (16), in which the porous carbon material has a BET specific surface area of 500 $m^2/g$ or more as measured by a nitrogen BET method.
(18) The dispersion of any one of (1) to (17), in which the dispersion has a viscosity of 1,000 Pa·s or less at a shear rate of 10 $s^{-1}$.
(19) The dispersion according to any one of (1) to (18), in which the dispersion is a liquid.
(20) An adsorbent material for PFAS, in which the dispersion according to any one of (1) to (19) is used.
(21) The adsorbent material for PFAS according to (20), in which PFAS is an anionic organofluorine compound.
(22) The adsorbent material for PFAS according to (21), in which the anionic organofluorine compound is an organofluorine compound having 8 or more carbon atoms.
(23) An environmental improvement method, in which the dispersion according to any one of (1) to (19) is used.
(24) The environmental improvement method according to (23), in which the environmental improvement is a soil improvement or an environmental water improvement.
(25) A powder for an environmental improvement liquid, the powder including:

a porous carbon material having a specific surface area value of 10 $m^2/g$ or more as measured by a nitrogen BET

method and a pore volume of 0.1 $cm^3$/g or more as measured by a BJH method and an MP method; and
a compound with a charge.

(26) The powder for an environmental improvement liquid according to (25), in which the compound with a charge is an ionic biodegradable polymer.
(27) The powder for an environmental improvement liquid according to (26), in which the biodegradable polymer is a compound having a polysaccharide skeleton.
(28) A method for dispersing a porous carbon material, the method including:
dispersing a porous carbon material in a dispersion by using a compound with a charge, the porous carbon material having a specific surface area value of 10 $m^2$/g or more as measured by a nitrogen BET method and a pore volume of 0.1 $cm^3$/g or more as measured by a BJH method and an MP method.
(29) The method for dispersing a porous carbon material according to (28), in which the compound with a charge is an ionic biodegradable polymer.
(30) The method for dispersing a porous carbon material according to (29), in which the biodegradable polymer is a compound having a polysaccharide skeleton.
(31) A porous carbon material having:

the porous carbon material has a specific surface area value of 10 $m^2$/g or more as measured by a nitrogen BET method; and
a pore volume of 0.1 $cm^3$/g or more as measured by a BJH method and an MP method, in which
a compound with a charge is bonded to the porous carbon material.

(32) The porous carbon material according to (31), in which the porous carbon material dispersed in water in an amount of 1% by weight has a zeta potential of +25 mV or more as measured at 25°C.
(33) The porous carbon material according to (31) or (32), in which the porous carbon material is used for dispersion.
(34) A filter including the porous carbon material according to any one of (31) to (33).

## Claims

**1.** A dispersion comprising:

a porous carbon material having a specific surface area value of 10 $m^2$/g or more as measured by a nitrogen BET method and a pore volume of 0.1 $cm^3$/g or more as measured by a BJH method and an MP method; and
a compound with a charge.

**2.** The dispersion according to claim 1, wherein the porous carbon material in the dispersion has a zeta potential of +25 mV to +100 mV as measured at 25°C.

**3.** The dispersion according to claim 1, wherein the compound with a charge is a compound with a cationic charge.

**4.** The dispersion according to claim 3, wherein the compound with a cationic charge is a compound having an amino group or an aluminol group.

**5.** The dispersion according to claim 1, wherein the porous carbon material and the compound with a charge are bonded to each other.

**6.** The dispersion according to claim 5, wherein the bond is a chemical bond.

**7.** The dispersion according to claim 1, wherein the compound with a charge is an ionic biodegradable polymer.

**8.** The dispersion according to claim 7, wherein the biodegradable polymer is a compound having a polysaccharide skeleton.

**9.** The dispersion according to claim 1, wherein the porous carbon material is a porous carbon material subjected to cationization treatment.

**10.** The dispersion according to claim 1, wherein a surface of the porous carbon material is substituted with an amino

group.

**11.** The dispersion according to claim 1, wherein a content of the porous carbon material is 0.01% to 25% by weight.

**12.** The dispersion according to claim 7, wherein a content of the ionic biodegradable polymer is 0.1% to 20% by weight with respect to the porous carbon material.

**13.** The dispersion according to claim 7, wherein a 1% solution viscosity of the ionic biodegradable polymer is 0.1 Pa·s or more.

**14.** The dispersion according to claim 1, wherein the porous carbon material has a cumulative pore volume of 0.4 cc/g or more in a range of 0.05 μm to 5 μm as measured by mercury porosimetry.

**15.** The dispersion according to claim 1, wherein the porous carbon material has an average particle diameter of 0.1 to 500 μm.

**16.** The dispersion according to claim 1, wherein the porous carbon material has a BET specific surface area of 500 $m^2/g$ or more as measured by a nitrogen BET method.

**17.** The dispersion of claim 1, wherein the dispersion has a viscosity of 1,000 Pa·s or less at a shear rate of 10 $s^{-1}$.

**18.** The dispersion according to claim 1, wherein the dispersion is a liquid.

**19.** An adsorbent material for PFAS, wherein the liquid according to claim 1 is used.

**20.** The adsorbent material for PFAS according to claim 19, wherein PFAS is an anionic organofluorine compound.

**21.** The adsorbent material for PFAS according to claim 20, wherein the anionic organofluorine compound is an organofluorine compound having 8 or more carbon atoms.

**22.** An environmental improvement method, wherein the dispersion according to claim 1 is used.

**23.** A powder for an environmental improvement liquid, the powder comprising:

a porous carbon material having a specific surface area value of 10 $m^2/g$ or more as measured by a nitrogen BET method and a pore volume of 0.1 $cm^3/g$ or more as measured by a BJH method and an MP method; and
a compound with a charge.

**24.** The powder for an environmental improvement liquid according to claim 23, wherein the compound with a charge is an ionic biodegradable polymer.

**25.** The powder for an environmental improvement liquid according to claim 24, wherein the biodegradable polymer is a compound having a polysaccharide skeleton.

**26.** A method for dispersing a porous carbon material, the method comprising
dispersing a porous carbon material in a dispersion by using a compound with a charge, the porous carbon material having a specific surface area value of 10 $m^2/g$ or more as measured by a nitrogen BET method and a pore volume of 0.1 $cm^3/g$ or more as measured by a BJH method and an MP method.

**27.** The method for dispersing a porous carbon material according to claim 26, wherein the compound with a charge is an ionic biodegradable polymer.

**28.** The method for dispersing a porous carbon material according to claim 27, wherein the biodegradable polymer is a compound having a polysaccharide skeleton.

**29.** A porous carbon material comprising:

a specific surface area value of 10 $m^2/g$ or more as measured by a nitrogen BET method; and

a pore volume of 0.1 $cm^3/g$ or more as measured by a BJH method and an MP method, wherein a compound with a charge is bonded to the porous carbon material.

**30.** The porous carbon material according to claim 29, wherein the porous carbon material dispersed in water in an amount of 1% by weight has a zeta potential of +25 mV or more as measured at 25°C.

**31.** The porous carbon material according to claim 29, wherein the porous carbon material is used for dispersion.

**32.** A filter comprising the porous carbon material according to claim 29.

## INTERNATIONAL SEARCH REPORT

International application No. **PCT/JP2024/000530**

**A. CLASSIFICATION OF SUBJECT MATTER**

***B01J 20/20***(2006.01)i; ***B09C 1/08***(2006.01)i; ***C01B 32/00***(2017.01)i
FI: B01J20/20 B; C01B32/00; B09C1/08 ZAB

According to International Patent Classification (IPC) or to both national classification and IPC

**B. FIELDS SEARCHED**

Minimum documentation searched (classification system followed by classification symbols)

B01J20/20; B09C1/08; C01B32/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2008/123606 A1 (SONY CORPORATION) 16 October 2008 (2008-10-16) paragraphs [0008]-[0040] | 1-32 |
| Y | JP 2006-068672 A (SK KAKEN CO., LTD.) 16 March 2006 (2006-03-16) paragraphs [0032]-[0039], [0045] | 1-32 |
| Y | WO 2023/277099 A1 (KAO CORPORATION) 05 January 2023 (2023-01-05) paragraphs [0028]-[0032] | 1-32 |
| Y | JP 2022-526919 A (BATTELLE MEMORIAL INSTITUTE) 27 May 2022 (2022-05-27) claims | 19-21 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/000530**

| Patent document cited in search report | Publication date (day/month/year) | Patent family member(s) | Publication date (day/month/year) |
|---|---|---|---|
| WO 2008/123606 A1 | 16 October 2008 | US 2010/0069507 A1<br>paragraphs [0008]-[0032]<br>EP 2060535 A1<br>KR 10-2010-0014074 A<br>CN 101541676 A | |
| JP 2006-068672 A | 16 March 2006 | (Family: none) | |
| WO 2023/277099 A1 | 05 January 2023 | JP 2023-8935 A | |
| JP 2022-526919 A | 27 May 2022 | US 2020/0306726 A1<br>claims<br>WO 2020/198394 A1<br>KR 10-2021-0142650 A<br>CA 3133644 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021079376 A

### Non-patent literature cited in the description

- BELSORP-mini and BELSORP analysis software manual. BEL Japan, Inc., 62-66
- BELSORP-mini and BELSORP analysis software manual. BEL Japan, Inc., 62-65
- BELSORP-mini and BELSORP analysis software manual. BEL Japan, Inc., 85-88